# EUROPÄISCHE PATENTSCHRIFT

(11) **EP 2 464 683 B1**
(45) Veröffentlichungstag und Bekanntmachung des Hinweises auf die Patenterteilung: **07.05.2014**
(21) Anmeldenummer: 10742469.9
(22) Anmeldetag: 04.08.2010
(51) Int. Cl.: C08J 9/08

(54) **SCHÄUMUNGSMITTEL FÜR KUNSTSTOFFE**
FOAMING AGENT FOR PLASTICS
AGENT D'EXPANSION POUR MATIÈRES PLASTIQUES

(30) Priorität: 14.08.2009 DE 102009028562
(43) Veröffentlichungstag der Anmeldung: 20.06.2012
(73) Patentinhaber: Chemische Fabrik Budenheim KG, 55257 Budenheim (DE)
(72) Erfinder: FUTTERER, Thomas, 55218 Ingelheim (DE); WERMTER, Hendrik, 65346 Eltville (DE); WISSEMBORSKI, Rüdiger, 55435 Gau-Algesheim (DE); SCHNEE, Rainer, 55130 Mainz (DE); KÜMMET, David, 55257 Budenheim (DE)
(74) Vertreter: WSL Patentanwälte Partnerschaft mbB
(86) Internationale Anmeldenummer: PCT/EP2010/061336
(87) Internationale Veröffentlichungsnummer: WO 2011/018398

(56) Entgegenhaltungen:
- EP-A2- 0 211 250
- EP-A2- 0 335 191
- WO-A1-95/05415
- GB-A- 2 061 281

## Beschreibung

Die Erfindung betrifft ein Verfahren zur Herstellung von geschäumten Kunststoffteilen, bei dem man eine Treibmittelzusammensetzung in eine Kunststoffmatrix einbringt und durch Freisetzung von Gas aus der Treibmittelzusammensetzung die Porenbildung in der Kunststoffmatrix bewirkt. Die Erfindung betrifft auch das Treibmittel selbst sowie entsprechende nach dem Verfahren hergestellte Kunststoffteile.

Die Herstellung von geschäumten Kunststoffteilen erfolgt unter Verwendung von Treibmitteln, die dem Kunststoff zugemischt oder in ihm gelöst werden und die in dem Kunststoff für die Erzeugung oder Freisetzung von Gas sorgen. Die Erzeugung von Gas kann dabei durch Zerfall oder Reaktion des Treibmittels oder von Komponenten in dem Treibmittel erfolgen. Die Freisetzung von Gas wird häufig durch Erwärmen und/oder chemische Reaktion eingeleitet und/oder bewirkt.

Beim Schäumen erfährt das Kunststoffteil eine auf eine Volumeneinheit bezogene Gewichtsverminderung, d.h. eine Verringerung seiner Dichte. Die Gewichtsverminderung entspricht dem prozentualen Anteil des geschäumten Kunststoffteils, welches Gas anstelle von Kunststoffmaterial enthält, d.h. im Wesentlichen dem Volumenanteil der Poren an dem Gesamtvolumen des Kunststoffteils.

Das Schäumen von Kunststoffteilen kann unterschiedlichen Zwecken dienen, beispielsweise der Gewichtsverminderung des Teils, der Herstellung eines thermisch isolierenden Teils, der Herstellung von Schwämmen, anderen saugfähigen Schaumstoffen oder der Herstellung von Schwimmkörpern. Je nach Anwendungszweck ist zu berücksichtigen, dass sich durch die Gewichtsverminderung bzw. die Erhöhung des Porenanteils die mechanischen, thermisch isolierenden, chemischen und andere Materialeigenschaften stark ändern können.

Man unterscheidet derzeit verschiedene Schäumungsverfahren:
1. Physikalische Verfahren, bei denen in die geschmolzene Kunststoffmasse physikalisch ein Gas eingeführt und zur Expansion gebracht wird. Die dabei entstehenden Gasblasen führen zu einer Schäumung des Kunststoffs. Nachteilig ist dabei der hohe apparative und steuerungstechnische Aufwand. Die Kunststoffverarbeitungsmaschinen, z.B. Extruder, müssen für die Schäumung mittels Gaszuführung mit hohem Aufwand umgerüstet werden. Ein weiteres Problem stellt die Abstimmung der Gaszugabe und -steuerung in Verbindung mit dem Schmelzverhalten des Kunststoffes dar.
2. Bei der sogenannten Lösungsmethode werden Kunststoffanteile mittels geeigneter Lösungsmittel aus einem Kunststoff-Vollmaterial herausgelöst. Dadurch entstehen Kammern und Kavernen, die zu einer gewünschten Gewichtsverringerung führen. Das Verfahren ist jedoch bereits aus Gründen des Umweltschutzes bedenklich und problembehaftet, da die verwendeten Lösungsmittel mit den darin enthaltenen Kunststoffanteilen große Entsorgungs- oder Wiederaufbereitungsprobleme aufwerfen.
3. Bei chemischen Schäumungsverfahren kamen in der Vergangenheit hauptsächlich FCKW-haltige Produkte als Treibmittel zum Einsatz. Aus Gründen der Umweltverträglichkeit werden diese Treibmittel jedoch zunehmend vermieden und gegen andere Treibmittel ersetzt. Es kommen zunehmend Diazoverbindungen, N-Nitrosoverbindungen, Sulfohydrazide, Hamstoffderivate, Guanidinderivate, Borhydrid/Wasser-Systeme, Carbonate und Hydrogencarbonate zum Einsatz. Ein Nachteil der Azoverbindungen ist die starke Ammoniakbildung beim Abbau und bei der Schaumbildung, was Bedenken hinsichtlich einer möglichen gesundheitlichen Gefährdung aufwirft. Viele Carbonate und Hydrogencarbonate zersetzen sich ohne weitere Zusatzstoffe unkontrolliert beim Erreichen der Degradationstemperatur. Dies hat eine unkontrollierte Schäumung, gegebenenfalls eine unerwünschte Verfärbung und/oder unerwünschten Geruch zur Folge.
4. Aus Polyurethan (PUR) lassen sich sehr einfach Schäume herstellen, die u.a. als Schaumgummi bekannt sind und als Reinigungsschwämme, Matratzenmaterialien oder Kissen, aber auch zur Wärmedämmung in Gebäuden, Kühlgeräten, Wärme- und Kältespeichern sowie zur Isolierung von Rohrsystemen eingesetzt werden. Seit einiger Zeit werden weitere Anwendungsgebiete für Polyurethan-Schäume erschlossen, beispielsweise im Fahrzeugbau. Polyurethan-Schäume, die für die Wärmedämmung vorgesehen sind, sind geschlossenporig aufgebaut, damit die Zellgase mit ihren niedrigen Wärmeleitfähigkeiten in den Schaumzellen verbleiben. Früher wurde häufig Trichlorfluormethan als Zellgas verwendet. Wegen der ozonschädigenden Eigenschaft dieses halogenierten Kohlenwasserstoffs wurde dieser jedoch weitgehend zunächst durch Kohlendioxid und dann durch Cyclopentan ersetzt, so dass die Schaumzellen heute in der Regel ein Gemisch aus etwa 10 bis 30 % Cyclopentan und als Rest Kohlendioxid enthalten.

Die meisten Treibmittel und Schäumungssysteme selbst oder ihre Reaktionsprodukte sind häufig umwelt- oder gesundheitsbedenklich und/oder werfen Probleme bei der Verarbeitung oder Handhabung auf. Ein solches Handhabungsproblem kann beispielsweise eine unkontrolliert schnelle, exotherme oder viel zu langsame Gasbildung sein, was dazu führen kann, dass entweder gar keine richtige Schaumbildung in den Kunststoffteilen stattfindet oder die Schaumstrukturen nicht den gewünschten Anforderungen entsprechen, beispielsweise aufgrund ungleichmäßiger Porenbildung, unerwünschter Porengrößen (zu groß oder zu klein), etc.

Ein Verfahren und eine Polymerisationsmischung zur Herstellung von Polyurethan-lntegralschaum sind Gegenstand der WO 95/05415 A1, wobei eine Isocyanat-Quelle enthaltende Komponente A mit einer Komponente B, enthaltend eine Polyol-Quellenmischung, ein Treibmittel und einen Polyurethan-Katalysator, kombiniert wird. Das Treibmittel enthält eine Carbonat-Quelle und gegebenenfalls Wasser sowie eine Alaun- und/oder eine Säure-Quelle. Die Isocyanat-Quelle und die Polyol-Quelle reagieren, und die Carbonat-Quelle zerfällt unter Bildung von Kohlendioxid, wobei ein Polyurethan mit integraler Haut erzeugt wird.

Aus der EP 0 211 250 A2 ist ein Nukleierungsmittel zur Herstellung direktbegaster Thermoplastschäume bekannt. Das Nukleierungsmittel besteht aus einer Mischung der Komponenten A, B und C, wobei A für Citronensäure, Salze der Citronensäure mit Alkali- oder Eralkalimetallen oder Ammoniumsalze der Citronensäure oder Mono- oder Diester der Citronensäure mit C₁ - C₈ Alkoholen, B für Alkali-, Erdalkali- oder Ammoniumcarbonat oder Alkali-, Erdalkali- oder Ammoniumcarbonat und C für Talkum stehen.

Die Aufgabe der vorliegenden Erfindung bestand daher darin, ein Verfahren zur Herstellung geschäumter Kunststoffteile bereitzustellen, bei dem sich die Schäumungsbedingungen und die Gasbildung besser steuern lassen als bei bekannten Treibmittelsystemen, bei dem die Treibmittel weniger oder keine Nachteile für die Umwelt und/oder die Gesundheit nach sich ziehen und die sich durch gute Handhabbarkeit und gute Produkteigenschaften auszeichnen.

Gelöst wird diese Aufgabe durch ein Verfahren der eingangs genannten Art zur Herstellung von geschäumten Kunststoffteilen, bei dem man eine Treibmittelzusammensetzung in eine Kunststoffmatrix einbringt und durch Freisetzung von wenigstens Kohlendioxidgas aus der Treibmittelzusammensetzung die Porenbildung in der Kunststoffmatrix bewirkt, wobei die Treibmittelzusammensetzung folgende Bestandteile enthält:
a) wenigstens einen Kohlendioxidträger, ausgewählt unter Carbonaten, Hydrogencarbonaten und Carbamaten der Alkalimetalle, der Erdalkalimetalle, des Aluminiums, der Übergangsmetalle und/oder von Ammonium,
b) wenigstens einen Säureträger,
wobei die Treibmittelzusammensetzung wenigstens zwei verschiedene Säureträger umfasst, darunter wenigstens einen ersten Säureträger (ST1) mit einer Reaktionsgeschwindigkeit (ROR) von weniger als 28 % CO₂, vorzugsweise weniger als 20 % CO₂, und wenigstens einen zweiten Säureträger (ST2) mit einer Reaktionsgeschwindigkeit (ROR) von mehr als 28 % CO₂, vorzugsweise mehr als 36 % CO₂, und/oder darunter wenigstens einen ersten Säureträger (ST1) und wenigstens einen zweiten Säureträger (ST2) deren Reaktionsgeschwindigkeiten (ROR) sich um wenigstens 10 % CO₂ unterscheiden, vorzugsweise um wenigstens 20 % CO₂ unterscheiden, wobei die ROR wie folgt definiert ist:
ROR = Prozent tatsächlich entstehende CO₂-Gas-Menge (Mol) gegenüber der bei vollständiger Umsetzung theoretisch erhältlichen CO₂-Gas-Menge bei Umsetzung eines stöchiometrischen Verhältnisses von Kohlendioxidträger und Säureträger bei einer Temperatur von 21°C für einen Zeitraum von 8 min.

Die erfindungsgemäße Treibmittelzusammensetzung, die wenigstens einen Kohlendioxidträger und wenigstens zwei verschiedene Säureträger enthält, erlaubt eine ausgezeichnete Steuerung der Gasbildung. Eine Einstellung der Gasbildung kann durch entsprechende Auswahl dieser Komponenten und ihrer Anteile erfolgen. Die erfindungsgemäßen Kohlendioxidträger sind an sich zumindest teilweise als Bestandteile von Backtriebmitteln bekannt. Die Säuren aus den Säureträgem sorgen für die Reaktion des Kohlendioxldträgers unter Erzeugung bzw. Freisetzung von Kohlendioxidgas für die Schäumung. Es war überraschend, dass sich diese Grundstoffe, Kohlendioxidträger und Säureträger, auch zum Schäumen von Kunststoffteilen eignen und dabei eine Vielzahl von Vorteilen gegenüber bekannten Schäumungsmitteln aufweisen. Beispielsweise sind die meisten der erfindungsgemäßen Treibmittelzusammensetzungen gesundheitlich unbedenklich, in der Regel sogar lebensmitteltauglich, und umweltverträglich. Damit hat das erfindungsgemäße Verfahren erhebliche Vorteile gegenüber der bekannten Lösungsmethode, chemischen Schäumungsverfahren und auch gegenüber der Herstellung von Polyurethan-Schäumen.

Ein weiterer Vorteil des erfindungsgemäßen Verfahrens gegenüber vielen Verfahren aus dem Stand der Technik ist die gute Kontrollierbarkeit der Schäumungsreaktion, da sich die Freisetzung des Kohlendioxidgases durch entsprechende Auswahl der Kohlendioxidträger und der Säureträger und ihrer Zusammensetzungen gut steuern lässt.

Die erfindungsgemäße Verwendung von wenigstens zwei verschiedenen Säureträgern mit unterschiedlichen Reaktionsgeschwindigkeiten (ROR), nämlich einem ersten Säureträger (ST1) mit einer geringeren Reaktionsgeschwindigkeit als derjenigen eines zweiten Säureträgers (ST2) bietet den überraschenden Vorteil einer besonders gleichmäßigen Schäumung und homogenen Porenbildung. Ohne dass man sich damit an eine Theorie binden will, nimmt man an, dass durch die Kombination wenigstens eines langsam reagierenden und eines schnell reagierenden Säureträgers zunächst durch den schneller reagierenden Säureträger mit relativ hoher Geschwindigkeit eine Vielzahl kleiner Schaumbläschen gebildet werden, die anschließend bei der Reaktion mit dem langsamer reagierenden Säureträger mit relativ niedriger Geschwindigkeit aufgefüllt werden. Hierbei wird eine sehr gleichmäßige Schäumung und Porenbildung beobachtet. Diese Beobachtung war überraschend und nicht vorhersehbar.

Besonders bevorzugt ist der wenigstens eine Kohlendioxidträger ausgewählt unter Natriumcarbonat, Natriumhydrogencarbonat, Magnesiumcarbonat, Magnesiumhydrogencarbonat, Calciumcarbonat, Calciumhydrogencarbonat, Aluminiumcarbonat, Aluminiumhydrogencarbonat, Eisencarbonat, Eisenhydrogencarbonat, Ammoniumcarbonat, Ammoniumhydrogencarbonat, Ammoniumcarbamat, und Gemischen der vorgenannten.

Die vorgenannten, als Kohlendioxidträger erfindungsgemäß geeigneten Verbindungen sind überwiegend gesundheitlich unbedenklich, teilweise sogar lebensmitteltauglich und umweltverträglich. Sie eignen sich hervorragend zur kontrollierten Freisetzung von Kohlendioxid mittels eines Säureträgers oder eines Gemisches von Säureträgern.

Bevorzugt ist der erfindungsgemäß verwendete wenigstens eine Säureträger ausgewählt unter Salzen von Phosphor enthaltenden Oxoanionen, besonders bevorzugt unter Phosphaten, kondensierten Phosphaten, Phosphonaten, Phosphiten, gemischten Hydroxid-Phosphaten und Cyanuraten.

Ganz besonders bevorzugt ist der wenigstens eine Säureträger ausgewählt unter saurem Natrium-Pyrophosphat (SAPP), Monocalciumphosphat-Monohydrat (MCPM), Dicalciumphosphat-Dihydrat (DCPD), Natrium-Aluminium-Sulfat (SAS), Natrium-Aluminium-Phosphat (SALP), Calcium-Magnesium-Aluminium-Phosphat, Calciumpolyphosphat, Magnesiumpolyphosphat und Gemischen der vorgenannten.

Die Menge an Treibmittelzusammensetzung, die zum Schäumen in eine Kunststoffmatrix einzubringen ist, kann der Fachmann bei einem gegebenen Kunststoffmaterial in Kenntnis der Erfindung durch wenige Versuche ermitteln. Die Menge an Treibmittelzusammensetzung wird u.a. von dem verwendeten und zu schäumenden Kunststoffmaterial und von der Treibmittelzusammensetzung sowie dem gewünschten Schäumungsergebnis unter Berücksichtigung der anzuwendenden Herstellungs- bzw. Schäumungsbedingungen abhängen. In einer bevorzugten Ausführungsform des erfindungsgemäßen Verfahrens bringt man 0,2 bis 10 Gew.-% Treibmittelzusammensetzung in die Kunststoffmatrix ein, bezogen auf das Gewicht der Kunststoffmatrix. Weiter bevorzugt bringt man 0,5 bis 6 Gew.-% Treibmittelzusammensetzung, besonders bevorzugt 1 bis 3 Gew.-% Treibmittelzusammensetzung in die Kunststoffmatrix ein.

Die Treibmittelzusammensetzung wird so ausgewählt bzw. zusammengesetzt, dass sie bei Raumtemperatur möglichst noch nicht unter Bildung von Kohlendioxidgases abreagiert oder zerfällt. Die Freisetzung von Kohlendioxidgas soll vorzugsweise erst bei erhöhter Temperatur, in der Regel bei der Verarbeitungstemperatur des Kunststoffmaterials in flüssigem bzw. schäumbarem Zustand erfolgen. Zweckmäßigerweise wird bei dem erfindungsgemäßen Verfahren die Freisetzung von wenigstens Kohlendioxidgas aus der Treibmittelzusammensetzung bei einer Temperatur im Bereich von 80 bis 400 °C, vorzugsweise 110 bis 350 °C, besonders bevorzugt 140 bis 300 °C durchgeführt.

Neben der Auswahl von Kohlendioxidträger(n) und Säureträger(n) lassen sich die Eigenschaften und die Reaktivität der Treibmittelzusammensetzung auch durch Zusätze beeinflussen. In bevorzugten Ausführungsformen der Erfindung enthält die Treibmittelzusammensetzung weiterhin ein Trennmittel zur Verhinderung oder Verzögerung der vorzeitigen Reaktion zwischen Kohlendioxidträger und Säureträger, das bevorzugt ausgewählt ist unter Getreidestärke, wie beispielsweise Maisstärke, Reisstärke oder Weizenstärke, modifizierten Mehlen, Siliziumdioxid, wie beispielsweise pyrogener Kieselsäure, hydrophober Kieselsäure oder hydrophiler Kieselsäure, Tricalciumphosphaten, Calciumcarbonat, Calciumsulfat, Silanen, Fetten und Gemischen der vorgenannten. Durch die Zugabe der Trennmittel kann nicht nur die vorzeitige Reaktion zwischen Kohlendioxidträger und Säureträger verhindert oder verzögert werden, sondern auch die Reaktionsgeschwindigkeit in der Kunststoffmatrix beeinflusst werden.

Das Einbringen der Treibmittelzusammensetzung erfolgt vorzugsweise über einen sogenannten Masterbatch. Unter dem Begriff Masterbatch versteht man in eine Kunststoffmatrix eingebettete Additive in Form von Granulaten, in denen die Additive in Gehalten vorliegen, die höher sind als in der Endanwendung. Sie werden dem Kunststoff (Rohpolymer) zum Einfärben oder zur Veränderung der Eigenschaften beigemischt. Masterbatches haben gegenüber dem Zusatz von verschiedenen Stoffen in Form von Pasten, Pulvern oder Flüssigkeiten den Vorteil, dass sie eine hohe Prozesssicherheit gewährleisten und sehr gut zu verarbeiten sind. Bei einem Masterbatch wird meist versucht das Additiv soweit wie möglich zu konzentrieren, d.h. so wenig Kunststoffmatrixmaterial wie möglich zu verwenden, um das Additiv oder die Additive einzubetten. Zur Herstellung eines Masterbatch werden die Additive, z.B. auch Farbpigmente, mit Rohpolymer, d. h. unbehandeltem Kunststoff-Granulat, vermischt. Diese Mischung wird anschließend in einem Extruder aufgeschmolzen und dann granuliert. Alternativ können die Komponenten auch direkt über unterschiedliche Dosierwaagen im Extruder gemischt und aufgeschmolzen werden. Ein Masterbatch ermöglicht eine einfache Handhabung aufgrund guter Dosierbarkeit.

Im Falle der Bereitstellung der erfindungsgemäßen Schäumungsmittel in einem Masterbatch ist darauf zu achten, dass die Schmelztemperatur des Polymerträgermaterials für den Masterbatch nicht höher ist als die Zersetzungstemperatur des Schäumungsmittels. Daher werden hier für den Masterbatch vorzugsweise niedrig Schmelzende Polymere, wie z.B. Polyethylen, insbesondere LDPE oder LLDPE und EVA, verwendet.

Das erfindungsgemäße Verfahren eignet sich zur Herstellung von geschäumten Kunststoffteilen aus im Wesentlichen allen Kunststoffsorten, die auch mit herkömmlichen Schäumungsmitteln geschäumt werden können. Erfindungsgemäß besonders bevorzugt wird das erfindungsgemäße Verfahren zur Herstellung von geschäumten Thermoplasten eingesetzt. Beispiele für geeignete thermoplastische Polymere sind folgende:
Polyolefine, wie Polyethylen, Polypropylen, Polybutylen, Polymethylpenten sowie Block-, Pfropfund Copolymere davon, Styrolpolymere, wie Standard-Polystyrol, schlagfestes Polystyrol, Styrolacrylnitril, Acrylnitrilbutadienstyrol, Acrylnitrilstyrol, Acrylkautschuk, halogenhaltige Vinylpolymer, wie Polyvinylchlorid, Polyvinylidenchlorid, Polyvinylfluorid, Tetrafluormethylen-Hexafluormethylen-Copolymer, Ethylen-Tetrafluorethylen-Copolymer, Polychlortrifluorethylen, Ethylen-Chlortrifluorethylen-Copolymer, Acrylpoymere, Polyacrylat, Polymethacrylat, Polyacetale, wie Polyoxymethylen, lineare Polykondensate wie Polyamide (PA-6, PA-66, PA-610, PA-612, PA-11, PA-12 etc.), Polycarbonate, Polyester (z. B. Polyethylenterephthalat, Polybutylenterephthalat etc.), Polyimide, Polyarylketone, Polysulfone, Polyurethane, Polyphenylene, Polymere aus ungesättigten Alkoholen und Aminen oder Acylderivaten oder Acetalen davon, wie Polyvinylalkohol, Polyvinylacetate, Polyvinylbutyral, Polyvinylbenzoat, vernetzte Polykondensate und Polyadukte, wie Phenoplaste, Aminoplaste, Epoxidharze, ungesättigte Polyester, Polyurethan, modifizierte Naturstoffe, wie Cellulosester, einschließlich Copolymere oder Mischungen der vorgenannten Polymere.

Die Erfindung wird nun anhand von Ausführungsbeispielen weiter erläutert.

### Vergleichsbeispiel 1

200 g Low Density-Polyethylen (LD-PE) wurden in einem Brabender-Kneter aufgeschmolzen, 2 Gew.-% (4 g) Treibmittelzusammensetzung zugegeben und für 30 Sekunden weiter geknetet. Der Kneter wurde angehalten und der Kunststoff entnommen. Gleichzeitig fand eine Schäumung unter Zunahme des Volumens bzw. Erniedrigung der Materialdichte statt.

Die Treibmittelzusammensetzungen enthielten als Kohlendioxidträger Natriumhydrogencarbonat (NaHCO₃) in einem Mengenverhältnis zur entsprechenden Säurekomponente, welches dem Neutralisationswert entsprach. Die in den verschiedenen Versuchen eingesetzte Säurekomponente und die nach dem Schäumen bzw. zur Kontrolle ohne Schäumen ermittelten Dichten der hergestellten Kunststoffteile sind in der nachfolgenden Tabelle 1 angegeben.

Es wurden folgende Säureträger eingesetzt:
- SAPP 10: = saures Natriumpyrophosphat mit einer ROR von 10 % CO₂
- SAPP 28: = saures Natriumpyrophosphat mit einer ROR von 28 % CO₂
- SAPP 40: = saures Natriumpyrophosphat mit einer ROR von 40 % CO₂
- SAS: = Natrium-Aluminium-Sulfat
- MCPM: = Monocalciumphosphat-Monohydrat
- DCPD: = Dicalciumphosphat-Dihydrat

**Tabelle 1**

| **Probe** | **Kunststoff** | **Säurekomponente** | **Dichte (g/cm³)** |
|---|---|---|---|
| 1 | LD-PE | --- (Kontrolle) | 0,78 |
| 2 | LD-PE | SAPP 10 | 0,66 |
| 3 | LD-PE | SAPP 28 | 0,52 |
| 4 | LD-PE | SAPP 40 | 0,77 |
| 5 | LD-PE | SAS | 0,56 |
| 6 | LD-PE | MCPM | 0,77 |
| 7 | LD-PE | DCPD | 0,50 |

### Versgleichsbeispiel 2

200g Polyamid 66 (PA66; Badamid, Firma BADA Plast, Bühl, Deutschland) wurden in einem Brabender-Kneter aufgeschmolzen, 2 Gew.-% (4 g) Treibmittelzusannmensetzung zugegeben und für 30 Sekunden weiter geknetet. Der Kneter wurde angehalten und der Kunststoff entnommen. Gleichzeitig fand eine Schäumung unter Zunahme des Volumens bzw. Erniedrigung der Materialdichte statt.

Die Treibmittelzusammensetzungen enthielten als Kohlendioxidträger Natriumhydrogencarbonat (NaHCO₃) in einem Mengenverhältnis zur entsprechenden Säurekomponente, welches dem Neutralisationswert entsprach. Die in den verschiedenen Versuchen eingesetzte Säurekomponente und die nach dem Schäumen bzw. zur Kontrolle ohne Schäumen ermittelten Dichten der hergestellten Kunststoffteile sind in der nachfolgenden Tabelle 2 angegeben.

**Tabelle 2**

| **Probe** | **Kunststoff** | **Säurekomponente** | **Dichte (g/cm³)** |
|---|---|---|---|
| 1 | PA66 | --- (Kontrolle) | 1,23 |
| 2 | PA66 | SAPP 10 | 1,04 |
| 3 | PA66 | SAPP 28 | 1,00 |
| 4 | PA66 | SAPP 40 | 0,93 |
| 5 | PA66 | SAS | 0,92 |
| 6 | PA66 | MCPM | 1,27 |

### Beispiel 3

Beispiel 1 mit Low Density-Polyethylen (LD-PE) wurde wiederholt, wobei die Treibmittelzusetzung 20 Gew.-% SAPP40 und 80 Gew.-% SALP (= Natrium-Aluminium-Phosphat; Na₃Al₂H₁₄(PO₄)₈) enthielt. Die mit dieser Treibmittelzusammensetzung, die zwei Triebsäuren mit unterschiedlichen ROR enthielt, erzielte Dichte bzw. Gewichtsersparnis entsprach derjenigen, die mit reinem SALP erreicht wurde, jedoch war die Blasenstruktur des mit der Triebsäurekombination geschäumten Kunststoffs erheblich gleichmäßiger.

Der für die gleichmäßigere Blasenstruktur wird darin vermutet, dass der schnell reagierende Säureträger zunächst Blasenkeime erzeugt, die dann von dem langsamer reagierenden Säureträger "aufgeblasen" werden. Wenn man nur schnell reagierenden Säureträger eingesetzt, erhält man sehr große Blasen, die sich auch untereinander verbinden.

## Patentansprüche

1. Verfahren zur Herstellung von geschäumten Kunststoffteilen, bei dem man eine Treibmittelzusammensetzung in eine Kunststoffmatrix einbringt und durch Freisetzung von wenigstens Kohlendioxidgas aus der Treibmittelzusammensetzung die Porenbildung in der Kunststoffmatrix bewirkt, wobei die Treibmittelzusammensetzung folgende Bestandteile enthält:
a) wenigstens einen Kohlendioxidträger, ausgewählt unter Carbonaten, Hydrogencarbonaten und Carbamaten der Alkalimetalle, der Erdalkalimetalle, des Aluminiums, der Übergangsmetalle und/oder von Ammonium,
b) wenigstens einen Säureträger,
**dadurch gekennzeichnet, dass** die Treibmittelzusammensetzung wenigstens zwei verschiedene Säureträger umfasst, darunter wenigstens einen ersten Säureträger (ST1) mit einer Reaktionsgeschwindigkeit (ROR) von weniger als 28 % CO₂, vorzugsweise weniger als 20 % CO₂, und wenigstens einen zweiten Säureträger (ST2) mit einer Reaktionsgeschwindigkeit (ROR) von mehr als 28 % CO₂, vorzugsweise mehr als 36 % CO₂, und/oder
darunter wenigstens einen ersten Säureträger (ST1) und wenigstens einen zweiten Säureträger (ST2) deren Reaktionsgeschwindigkeiten (ROR) sich um wenigstens 10 % CO₂ unterscheiden, vorzugsweise um wenigstens 20 % CO₂ unterscheiden,
wobei die ROR wie folgt definiert ist:
ROR = Prozent tatsächlich entstehende CO₂-Gas-Menge (Mol) gegenüber der bei vollständiger Umsetzung theoretisch erhältlichen CO₂-Gas-Menge bei Umsetzung eines stöchiometrischen Verhältnisses von Kohlendioxidträger und Säureträger bei einer Temperatur von 21°C für einen Zeitraum von 8 min.

2. Verfahren nach einem Anspruch 1, **dadurch gekennzeichnet, dass** der wenigstens eine Kohlendioxidträger ausgewählt ist unter Natriumcarbonat, Natriumhydrogencarbonat, Magnesiumcarbonat, Magnesiumhydrogencarbonat, Calciumcarbonat, Calciumhydrogencarbonat, Aluminiumcarbonat, Aluminiumhydrogencarbonat, Eisencarbonat, Eisenhydrogencarbonat, Ammoniumcarbonat, Ammoniumhydrogencarbonat, Ammoniumcarbamat, und Gemischen der vorgenannten.

3. Verfahren nach einem der vorangegangenen Ansprüche, **dadurch gekennzeichnet, dass** der wenigstens eine Säureträger ausgewählt ist unter Salzen von Phosphor enthaltenden Oxoanionen, vorzugsweise unter Phosphaten, kondensierten Phosphaten, Phosphonaten, Phosphiten, gemischten Hydroxid-Phosphaten und Cyanuraten.

4. Verfahren nach einem der vorangegangenen Ansprüche, **dadurch gekennzeichnet, dass** der wenigstens eine Säureträger ausgewählt ist unter saurem Natrium-Pyrophosphat (SAPP), Monocalciumphosphat-Monohydrat (MCPM), Dicalciumphosphat-Dihydrat (DCPD), Natrium-Aluminium-Sulfat (SAS), Natrium-Aluminium-Phosphat (SALP), Calcium-Magnesium-Aluminium-Phosphat, Calciumpolyphosphat, Magnesiumpolyphosphat und Gemischen der vorgenannten.

5. Verfahren nach einem der vorangegangenen Ansprüche, **dadurch gekennzeichnet, dass** man 0,2 bis 10 Gew.-% Treibmittelzusammensetzung, vorzugsweise 0,5 bis 6 Gew.-% Treibmittelzusammensetzung, besonders bevorzugt 1 bis 3 Gew.-% Treibmittelzusammensetzung in die Kunststoffmatrix einbringt, bezogen auf das Gewicht der Kunststoffmatrix.

6. Verfahren nach einem der vorangegangenen Ansprüche, **dadurch gekennzeichnet, dass** man die Freisetzung von wenigstens Kohlendioxidgas aus der Treibmittelzusammensetzung bei einer Temperatur im Bereich von 80 bis 400 °C, vorzugsweise 110 bis 350 °C, besonders bevorzugt 140 bis 300°C durchführt.

7. Verfahren nach einem der vorangegangenen Ansprüche, **dadurch gekennzeichnet, dass** die Treibmittelzusammensetzung weiterhin ein Trennmittel zur Verhinderung oder Verzögerung einer vorzeitigen Reaktion zwischen Kohlendioxidträger und Säureträger enthält, ausgewählt unter Getreidestärke, wie Maisstärke, Reisstärke, Weizenstärke, modifizierten Mehlen, Siliziumdioxiden, wie pyrogener Kieselsäure, hydrophober Kieselsäure, hydrophiler Kieselsäure, Tricalciumphosphaten, Calciumcarbonat, Calciumsulfat, Silanen, Fetten und Gemischen der vorgenannten.

8. Verfahren nach einem der vorangegangenen Ansprüche, **dadurch gekennzeichnet, dass** der Kunststoff ein thermoplastischer Kunststoff ist.

9. Geschäumte Kunststoffteile, hergestellt nach einem Verfahren gemäß einem der vorangegangenen Ansprüche.

10. Treibmittelzusammensetzung, wie sie in einem der Ansprüche 1 bis 7 definiert ist und welche a) wenigstens einen Kohlendioxidträger, ausgewählt unter Carbonaten, Hydrogencarbonaten und Carbamaten der Alkalimetalle, der Erdalkalimetalle, des Aluminiums, der Übergangsmetalle und/oder von Ammonium, und b) wenigstens einen Säureträger enthält, in Pulverform oder eingebettet in eine Kunststoffmatrix in Granulatform (Masterbatch).

11. Verwendung einer Treibmittelzusammensetzung nach Anspruch 10 zur Herstellung von geschäumten Kunststoffteilen.

## Claims

1. A process for the production of foamed plastic parts, in which a blowing agent composition is introduced into a plastic matrix and causes pore formation in the plastic matrix by releasing at least carbon dioxide gas from the blowing agent composition, wherein the blowing agent composition contains the following constituents:
a) at least one carbon dioxide carrier selected from carbonates, hydrogen carbonates and carbamates of alkali metals, alkaline earth metals, aluminum, transition metals and/or ammonium, and
b) at least one acid carrier,
**characterised in that** the blowing agent composition includes at least two different acid carriers, thereamong at least one first acid carrier (ST1) with a rate of reaction (ROR) of less than 28% CO₂, preferably less than 20% CO₂, and at least one second acid carrier (ST2) with a rate of reaction (ROR) of more than 28% CO₂, preferably more than 36% CO₂, and/or
thereamong at least one first acid carrier (ST1) and at least one second acid carrier (ST2) whose rates of reaction (ROR) differ by at least 10% CO₂, preferably by at least 20% CO₂,
wherein the ROR is defined as follows:
ROR = amount of CO₂ gas (mol) which actually occurs in percent in relation to the amount of CO₂ gas which can theoretically be obtained upon complete reaction upon reaction of a stoichiometric ratio of carbon dioxide carrier and acid carrier at a temperature of 21°C for a period of 8 mins.

2. A process according to claim 1 **characterised in that** the at least one carbon dioxide carrier is selected from sodium carbonate, sodium hydrogen carbonate, magnesium carbonate, magnesium hydrogen carbonate, calcium carbonate, calcium hydrogen carbonate, aluminum carbonate, aluminum hydrogen carbonate, iron carbonate, iron hydrogen carbonate, ammonium carbonate, ammonium hydrogen carbonate, ammonium carbamate and mixtures of the aforesaid.

3. A process according to one of the preceding claims **characterised in that** the at least one acid carrier is selected from salts of phosphorus-bearing oxoanions, preferably from phosphates, condensed phosphates, phosphonates, phosphites, mixed hydroxide phosphates and cyanurates.

4. A process according to one of the preceding claims **characterised in that** the at least one acid carrier is selected from acid sodium pyrophosphate (SAPP), monocalcium phosphate monohydrate (MCPM), dicalcium phosphate dihydrate (DCPD), sodium aluminum sulphate (SAS), sodium aluminum phosphate (SALP), calcium magnesium aluminum phosphate, calcium polyphosphate, magnesium polyphosphate and mixtures of the aforesaid.

5. A process according to one of the preceding claims **characterised in that** 0.2 to 10% by weight of blowing agent composition, preferably 0.5 to 6% by weight of blowing agent composition, particularly preferably 1 to 3% by weight of blowing agent composition, is introduced into the plastic matrix, with respect to the weight of the plastic matrix.

6. A process according to one of the preceding claims **characterised in that** release of at least carbon dioxide gas from the blowing agent composition is effected at a temperature in the range of 80 to 400°C, preferably 110 to 350°C, particularly preferably 140 to 300°C.

7. A process according to one of the preceding claims **characterised in that** the blowing agent composition further contains a separating agent for preventing or delaying a premature reaction between carbon dioxide carrier and acid carrier, selected from cereal starch such as corn starch, rice starch, wheat starch, modified flours, silicon dioxides such as pyrogenic silicic acid, hydrophobic silicic acid, hydrophilic silicic acid, tricalcium phosphates, calcium carbonate, calcium sulphate, silanes, fats and mixtures of the aforesaid.

8. A process according to one of the preceding claims **characterised in that** the plastic is a thermoplastic.

9. Foamed plastic parts produced by a process according to one of the preceding claims.

10. A blowing agent composition as defined in one of claims 1 to 9 and which contains a) at least one carbon dioxide carrier selected from carbonates, hydrogen carbonates and carbamates of alkali metals, alkaline earth metals, aluminum, transition metals and/or ammonium, and b) at least one acid carrier, in powder form or embedded in a plastic matrix in granule form (masterbatch).

11. Use of a blowing agent composition according to claim 10 for the production of foamed plastic parts.

## Revendications

1. Procédé de fabrication de pièces plastiques expansées, dans lequel on introduit une composition d'agents porogènes dans une matrice plastique et, par libération d'au moins un dioxyde de carbone gazeux à partir de la composition d'agents porogènes, on provoque la formation de pores dans la matrice plastique, la composition d'agents porogènes contenant les constituants suivants :
a) au moins un support de dioxyde de carbone, choisi parmi les carbonates, les hydrogénocarbonates et les carbamates de métaux alcalins, de métaux alcalino-terreux, d'aluminium, de métaux de transition et/ou d'ammonium,
b) au moins un support d'acide,
**caractérisé en ce que** la composition d'agents porogènes comprend au moins deux supports d'acide différents, parmi lesquels au moins un premier support d'acide (ST1) ayant une vitesse de réaction (ROR) inférieure à 28 % de CO₂, de préférence inférieure à 20 % de CO₂, et au moins un second support d'acide (ST2) ayant une vitesse de réaction (ROR) supérieure à 28 % de CO₂, de préférence supérieure à 36 % de CO₂, et/ou
parmi lesquels au moins un premier support d'acide (ST1) et au moins un second support d'acide (ST2) dont les vitesses de réaction (ROR) diffèrent d'au moins 10 % de CO₂, de préférence d'au moins 20 % de CO₂,
le ROR étant défini comme suit :
ROR = pourcentage de la quantité de CO₂ gazeux qui se dégage effectivement (moles) par rapport à la quantité de CO₂ gazeux pouvant être obtenue en théorie dans le cas d'une conversion complète, lors de la réaction d'une proportion stoechiométrique du support de dioxyde de carbone et du support d'acide, à une température de 21°C et pendant un laps de temps de 8 min.

2. Procédé selon la revendication 1, **caractérisé en ce que** le support de dioxyde de carbone, au moins au nombre de un, est choisi parmi le carbonate de sodium, l'hydrogénocarbonate de sodium, le carbonate de magnésium, l'hydrogénocarbonate de magnésium, le carbonate de calcium, l'hydrogénocarbonate de calcium, le carbonate d'aluminium, l'hydrogénocarbonate d'aluminium, le carbonate de fer, l'hydrogénocarbonate de fer, le carbonate d'ammonium, l'hydrogénocarbonate d'ammonium, le carbamate d'ammonium et des mélanges de ceux-ci.

3. Procédé selon l'une des revendications précédentes, **caractérisé en ce que** le support d'acide, au moins au nombre de un, est choisi parmi les sels d'oxo-anions contenant du phosphore, de préférence parmi les phosphates, les phosphates condensés, les phosphonates, les phosphites, les hydroxydes phosphates mixtes et les cyanurates.

4. Procédé selon l'une des revendications précédentes, **caractérisé en ce que** le support d'acide, au moins au nombre de un, est choisi parmi le pyrophosphate acide de sodium (SAPP), le phosphate monocalcique monohydraté (MCPM), le phosphate dicalcique dihydraté (DCPD), le sulfate de sodium et d'aluminium (SAS), le phosphate de sodium et d'aluminium (SALP), le phosphate de calcium, de magnésium et d'aluminium, le polyphosphate de calcium, le polyphosphate de magnésium et des mélanges de ceux-ci.

5. Procédé selon l'une des revendications précédentes, **caractérisé en ce qu'**on introduit dans la matrice plastique 0,2 à 10 % en poids de la composition d'agents porogènes, de préférence 0,5 à 6 % en poids de la composition d'agents porogènes, d'une manière particulièrement préférée 1 à 3 % en poids de la composition d'agents porogènes, sur la base du poids de la matrice plastique.

6. Procédé selon l'une des revendications précédentes, **caractérisé en ce qu'**on met en oeuvre la libération d'au moins le dioxyde de carbone gazeux à partir de la composition d'agents porogènes à une température comprise dans la plage de 80 à 400 °C, de préférence de 110 à 350 °C, d'une manière particulièrement préférée de 140 à 300 °C.

7. Procédé selon l'une des revendications précédentes, **caractérisé en ce que** la composition d'agents porogènes contient en outre un agent de séparation, destiné à empêcher ou retarder une réaction prématurée entre le support de dioxyde de carbone et le support d'acide, choisi parmi les amidons de céréales tels que l'amidon de maïs, l'amidon de riz, l'amidon de blé, les farines modifiées, les dioxydes de silicium tels que la silice pyrogène, la silice hydrophobe, la silice hydrophile, les phosphates tricalciques, le carbonate de calcium, le sulfate de calcium, les silanes, les graisses et des mélanges de ceux-ci.

8. Procédé selon l'une des revendications précédentes, **caractérisé en ce que** le plastique est un matériau plastique thermoplastique.

9. Pièces plastiques expansées fabriquées par un procédé selon l'une des revendications précédentes.

10. Composition d'agents porogènes telle que définie dans l'une des revendications 1 à 7, et qui contient a) au moins un support de dioxyde de carbone choisi parmi les carbonates, les hydrogénocarbonates et les carbamates de métaux alcalins, de métaux alcalino-terreux, d'aluminium, de métaux de transition et/ou d'ammonium, et b) au moins un support d'acide, sous forme pulvérulente ou incorporée dans une matrice plastique sous forme de granulés (mélange-maître).

11. Utilisation d'une composition d'agents porogènes selon la revendication 10 pour fabriquer des pièces plastiques expansées.
